# EUROPEAN PATENT APPLICATION

(11) **EP 4 732 963 A1**
(43) Date of publication of application: **29.04.2026**
(21) Application number: 25795012.1
(22) Date of filing: 18.04.2025
(51) Int. Cl.: B05C 5/02, B05C 11/10, H01M 4/04

(54) **INSULATING LIQUID FLOW PATH STRUCTURE OF SLOT DIE COATER**

(30) Priority: 23.04.2024 KR 20240053943
(71) Applicant: LG Energy Solution, Ltd., Seoul 07335 (KR)
(72) Inventor: PARK, Min Gu, Daejeon 34122 (KR); MOON, Young Gyu, Daejeon 34122 (KR); CHOI, Min Hyuck, Daejeon 34122 (KR); KIM, Guk Tae, Daejeon 34122 (KR); LIM, Chae Ryeun, Daejeon 34122 (KR); KIM, Min Cheol, Daejeon 34122 (KR)
(74) Representative: Plasseraud IP
(86) International application number: PCT/KR2025/005299
(87) International publication number: WO 2025/225974

(57) **Abstract**

Disclosed herein relates to a slot die coater including: a first die block provided with a manifold for accommodating an electrode slurry; a second die block coupled to the first die block; and a coater shim interposed between the first die block and the second die block in a form that wraps around both sides and the rear surface of the manifold, wherein at front surfaces of the first die block and the second die block, an area not sealed by the coater shim while communicating with the manifold forms an electrode slurry slot, and on the surface of the first die block and/or the second die block in contact with the coater shim, a groove formed concavely to have an open end toward the front surface of the first die block and the second die block forms an insulating solution slot.

## Description

### [Technical Field]

The present disclosure relates to a slot die coater that simultaneously discharges electrode slurry and insulating solution onto an electrode foil, and more specifically, to an insulating solution flow structure of a slot die coater in which an insulating solution slot for discharging insulating solution is formed in a die block die.

This application claims the benefit of Korean Patent Application No. 10-2024-0053943, filed on April 23, 2024, the disclosure of which is incorporated herein by reference.

### [Background]

Lithium secondary batteries are widely used not only in small devices such as portable electronic devices but also in medium-to-large devices such as battery packs or power storage devices for hybrid vehicles or electric vehicles. In particular, with growing concern over environmental issues, research on electric vehicles and hybrid vehicles, which can replace fossil fuel-powered vehicles such as gasoline and diesel vehicles that are one of the major causes of air pollution, has been actively conducted.

Generally, lithium secondary batteries consist of an electrode assembly, consisting of a positive electrode, a negative electrode, and a separator, is immersed in a lithium electrolyte. The electrodes are formed by coating an electrode slurry containing the active material onto an electrode current collector. For this coating process, coating devices such as a slot die coater are used.

The slot die coater includes an upper die block and a lower die block that form a chamber for supplying the electrode slurry, and a shim member positioned between them to set the height and width of the slot that discharges the active material slurry. The space between the plurality of shim members forms the slot. The height of the slot through which the active material slurry is discharged is determined by the height of the shim member, and the width of the slot is determined by the distance between the spaced-apart shim members.

When coating electrode slurry using a slot die coater, the shape of the edges varies depending on the extent to which the electrode slurry spreads (sliding length). When the spreading extent of the electrode slurry is small, the sliding length that reduces the edge thickness becomes shorter, forming an area thicker than the average thickness. This increases the risk of breakage caused by the side ring during electrode roll winding and increases the risk of N/P ratio reversal.

Conversely, when the spreading extent of the electrode slurry is large, the sliding length increases, reducing the edge thickness. As a result, the capacity decreases proportionally to the lengthening of the sliding part, and there is a risk of lithium precipitation due to air traps. As such, various aspects of the electrode, including capacity, safety, and lifespan, are significantly influenced by the sliding length of the electrode slurry. To control this, a technique involving the simultaneous discharge of insulating solution to the edge of the electrode slurry can be applied. The insulating solution acts as a dam to control the amount of electrode slurry spreading, and by adjusting the discharge volume and width of the insulating solution, the electrode slurry can be controlled to spread to an appropriate level.

The electrode slurry and insulating solution are simultaneously discharged onto the moving electrode, and for this purpose, the shim member of the slot die coater is equipped with an insulating solution flow path. For example, the shim member may be composed of two types: a body shim and a spacer shim, with a plurality of spacer shims disposed in the inner void area of the body shim. The space between the spacer shims forms the discharge slots for the electrode slurry, while the insulating solution is discharged through the concave insulating solution flow path formed on the surface of the spacer shim.

In the structure of this slot die coater, the height of the electrode slurry discharge slot is determined by the thickness of the shim member. Also, the height of the insulating solution slot is determined by the depth of the insulating solution flow path formed concavely on the surface of the spacer shim. Since the insulating solution flow path must be machined within the very limited thickness of the spacer shim, the service life of the spacer shim is not very long. In other words, the spacer shim is prone to damage such as bending and wear due to the pressure exerted by the insulating solution supplied under pressure, and since the service life of the spacer shim is short, the replacement of the spacer shim must be performed frequently.

To replace the spacer shim, the slot die coater must be disassembled, and a new spacer shim must be installed. The replacement process requires precise alignment, which is time-consuming, and the equipment must be shut down during replacement, negatively impacting productivity.

### [Summary]

### [Technical Problem]

The present disclosure aims to provide a structure that effectively forms a durable insulating solution flow path in a slot die coater that simultaneously discharges electrode slurry and insulating solution.

However, the technical problems addressed by the present disclosure are not limited to the above-mentioned problems, and other problems not mentioned herein will be clearly understood by those skilled in the art from the description of the disclosure set forth below.

### [Technical Solution]

The present disclosure relates to a slot die coater, wherein, in one embodiment, includes: a first die block provided with a manifold for accommodating an electrode slurry; a second die block coupled to the first die block; and a coater shim interposed between the first die block and the second die block in a form that wraps around both sides and a rear surface of the manifold, wherein at front surfaces of the first die block and the second die block, an area not sealed by the coater shim while communicating with the manifold forms an electrode slurry slot, and on the surface of the first die block and/or the second die block in contact with the coater shim, a groove formed concavely to have an open end toward the front surface of the first die block and the second die block forms an insulating solution slot.

An insulating solution supply flow path may be connected to an inner closed end of the groove forming the insulating solution slot.

For example, the insulating solution supply flow path may be connected to the inner closed end of the groove by passing through the first die block and/or the second die block.

In addition, a wear-resistant coating layer may be formed on the surface of the groove forming the insulating solution slot.

In an exemplary embodiment, the groove forming the insulating solution slot is formed on the surfaces of the first die block and the second die block, wherein the openings of the insulating solution slots of the groove formed on the surfaces of the first die block and the second die block may be disposed so that they overlap vertically.

Alternatively, the groove forming the insulating solution slot is formed on surfaces of the first die block and the second die block, wherein openings of the insulating solution slots of the groove formed respectively on the surfaces of the first die block and the second die block may be spaced apart so that they do not overlap vertically.

In an embodiment of the present disclosure, the groove forming the insulating solution slot may be formed on a reinforcing plate that is replaceably coupled to the first die block and/or the second die block.

The reinforcing plate may be slidably coupled to the first die block and/or the second die block.

For example, the reinforcing plate, the first die block, and/or the second die block may each have a dovetail-shaped contact surface.

In addition, the slot die coater may further include a stopper for restricting the separation of the reinforcing plate from the first die block and/or the second die block.

In addition, the reinforcing plate may be made of a material having equal or greater strength than the first die block and/or the second die block.

Depending on the embodiment, the slot die coater may further include a dummy plate having the same shape as the reinforcing plate but without the groove.

### [Advantageous Effects]

The slot die coater of the present disclosure, having the above configuration, does not require a separate spacer shim and provides an insulating solution slot on the surface of the first die block and/or the second die block, which have excellent rigidity and are resistant to deformation.

Accordingly, unlike conventional slot die coaters, which often caused problems such as bending or damage to the spacer shim due to the pressure of the insulating solution because the insulating solution slot was formed on a thin spacer shim, the slot die coater of the present disclosure can be operated stably for a long time without any durability problems of the insulating solution slot.

However, the technical effects that can be obtained with the present disclosure are not limited to the effects described above, and other effects not mentioned will be clearly understood by those of ordinary skill in the art from the description of the invention set forth below.

### [Brief Description of the Drawings]

The following drawings accompanying this specification illustrate preferred embodiments of the present disclosure and serve to further illustrate the technical ideas of the disclosure in conjunction with the detailed description of the disclosure that follows, and the disclosure should not be construed as limited to the matters shown in such drawings.
FIG. 1 is a drawing illustrating an example of a conventional slot die coater.
FIG. 2 is an enlarged view of protion "A" of FIG. 1.
FIG. 3 is a drawing illustrating sliding control achieved by simultaneously discharging electrode slurry and insulating solution.
FIG. 4 is a drawing illustrating a slot die coater according to an embodiment of the present disclosure.
FIG. 5 is a drawing illustrating the front surface of a slot die coater according to an embodiment of the present disclosure.
FIG. 6 is another drawing illustrating the front surface of the slot die coater.
FIGS. 7 and 8 are drawings illustrating an embodiment of a slot die coater having a double groove configuration.
FIG. 9 is a drawing illustrating a slot die coater according to another embodiment of the present disclosure.
FIG. 10 is a drawing illustrating an example of a fixing structure of a reinforcing plate.
FIG. 11 is a drawing illustrating an example of a dummy plate.

### [Description of Reference Numerals]

10: SLOT DIE COATER
12: FRONT SURFACE
14: LIP
20: ELECTRODE SLURRY SLOT
30: INSULATING SOLUTION SLOT
100: FIRST DIE BLOCK
110: MANIFOLD
200: SECOND DIE BLOCK
300: COATER SHIM
302: BRANCH
310: BODY SHIM
320: SPACER SHIM
330: INSULATING SOLUTION SUPPLY FLOW PATH
332: INSULATING SOLUTION SUPPLY HOLE
334: INSULATING SOLUTION FLOW PATH (GROOVE)
340: WEAR-RESISTANT COATING LAYER
400: REINFORCING PLATE
410: DOVETAIL CONTACT SURFACE
420: STOPPER
430: DUMMY PLATE
TD: TRANSVERSE DIRECTION
MD: MACHINE DIRECTION

### [Best Mode for Carrying out the Invention]

The present disclosure is subject to various modifications and can have many embodiments, certain of which are described in detail below.

However, this is not intended to limit the disclosure to any particular embodiment and is to be understood to include all modifications, equivalents, or substitutions that fall within the scope of the thought and skill of the present disclosure.

In the present disclosure, the terms "comprising" or "having" and the like are intended to designate the presence of the features, numbers, steps, actions, components, parts, or combinations thereof described, and are not intended to preclude the possibility of the presence or addition of one or more other features, numbers, steps, actions, components, parts, or combinations thereof.

Furthermore, when the present disclosure describes a layer, membrane, region, plate, etc. as being "on top of" another part, this includes not only when it is "directly above" another part, but also when there is another part in between. Conversely, when a layer, membrane, region, plate, etc. is described as being "underneath" another, this includes not only when it is "directly under" another, but also when there is another part in between. Also, in the present application, when a part is the to be disposed "on top of" another part, this may include not only being disposed on the upper part, but also being disposed on the lower part.

The present disclosure relates to a slot die coater, and in one embodiment, includes: a first die block provided with a manifold for accommodating an electrode slurry; a second die block coupled to the first die block; and a coater shim interposed between the first die block and the second die block in a form that wraps around both sides and the rear surface of the manifold, wherein at the front surfaces of the first die block and the second die block, an area not sealed by the coater shim while communicating with the manifold forms an electrode slurry slot, and on the surface of the first die block and/or the second die block in contact with the coater shim, a groove formed concavely to have an open end toward the front surface of the first die block and the second die block forms an insulating solution slot.

In this way, the slot die coater of the present disclosure does not require a separate spacer shim and provides an insulating solution slot on the surface of the first die block and/or the second die block, which has excellent rigidity and is resistant to deformation. Therefore, unlike conventional slot die coaters, where the insulating solution slots are formed on thin spacer shims, causing the spacer shims to bend or damage due to the pressure of the insulating solution, the slot die coater of the present disclosure can operate stably for extended periods without issues related to the durability of the insulating solution slots.

### [Mode for Carrying out the Invention]

Below, with reference to the attached drawings, specific embodiments of the insulating solution flow structure of the slot die coater according to the present disclosure are described in detail. Note that the relative positions indicated by terms such as "front/rear" and "upper/lower/left/right" in the following description are for the purpose of facilitating understanding of the disclosure, and unless otherwise specified, the directions shown in the drawings are used as the reference direction.

### [First embodiment]

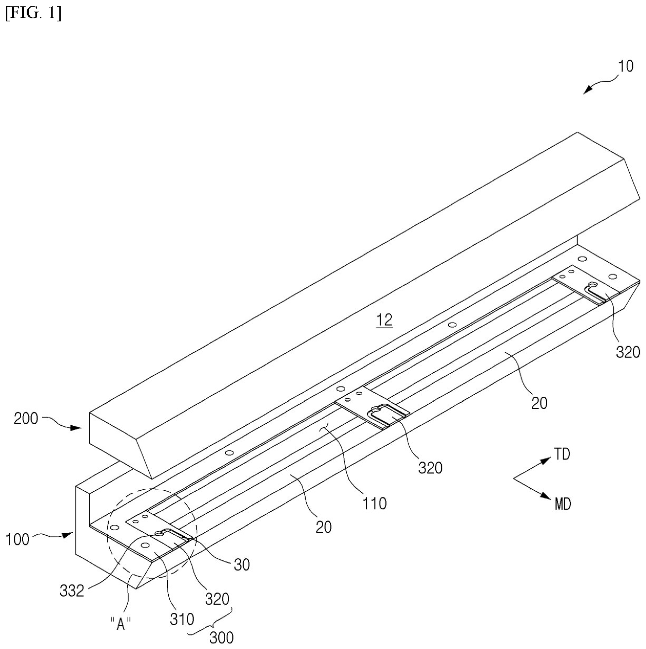

FIG. 1 is a drawing showing an example of a conventional slot die coater 10. For ease of understanding of the present disclosure, the typical configuration of the slot die coater 10 is first described with reference to FIG. 1.

FIG. 1 is an exploded perspective view of the slot die coater 10, including the first die block 100, the second die block 200, and the coater shim 300. Here, the first die block 100, the second die block 200, and the coater shim 300 are the main components forming the core of the slot die coater 10, while auxiliary components such as fastening bolts or pipes are omitted from the figure for clarity.

The first die block 100 is a block corresponding to one half of the body of the slot die coater 10, which is provided with a manifold 110 for accommodating the electrode slurry. And, the second die block 200 is a block corresponding to the remaining half of the body of the slot die coater 10. The first and second die blocks 100, 200 are mutually fastened to form a single slot die coater 10.

Based on the direction shown in the figure, the first die block 100 can also be referred to as the lower die block, and the second die block 200 can also be referred to as the upper die block. The first die block 100 and the second die block 200 are coupled by a plurality of fastening bolts not shown, allowing them to be disassembled and reassembled. Additionally, the coater shim 300 is interposed between the first die block 100 and the second die block 200.

The coater shim 300 serves to seal the coupling surface between the first die block 100 and the second die block 200. The flow of electrode slurry pressurized into the manifold 110 is prevented by the coater shim 300. Additionally, the coater shim 300 forms an electrode slurry slot 20 that discharges electrode slurry onto the front surface 12 of the slot die coater 10. That is, on the front surface 12 of the first die block 100 and the second die block 200, a thin region that is not sealed by the coater shim 300 while communicating with the manifold 110 forms the electrode slurry slot 20. In a typical case, the front surface 12 of the slot die coater 10 has a protruding part called a lip 14, and the electrode slurry slot 20 is formed along the lip 14.

In the conventional slot die coater 10, the coater shim 300 includes a body shim 310 and a plurality of spacer shims 320. The body shim 310 can form a bent shape that wraps around both sides and the rear surface of the manifold 110. The body shim 310 primarily serves to seal the electrode slurry over a wide area. The plurality of spacer shims 320 is spaced apart between the body shims 310 and arranged to extend across the manifold 110 toward the front surface 12 (i.e., the lip of the slot die coater). The two spacer shims 320 adjacent to both ends in the transverse direction TD are mutually pressed against the sides of the body shim 310 to prevent the electrode slurry from leaking out.

The thickness of the body shim 310 and the spacer shims 320 is substantially the same, and this thickness defines the height of the electrode slurry slot 20 through which the electrode slurry is discharged. The width of the electrode slurry slot 20 is defined by the spacing between the spacer shims 320 that are spaced apart. In the illustrated embodiment, the coater shim 300 has a structure comprising a body shim 310 and a plurality of spacer shims 320, as replacing the spacer shims 320 instead of the entire coater shim 300 is more efficient in terms of maintenance effort and cost. The corners of the spacer shims 320 are subjected to high pressure from the electrode slurry, so their lifespan is limited due to deformation or wear. Therefore, there are many advantages to replacing only the spacer shims 320.

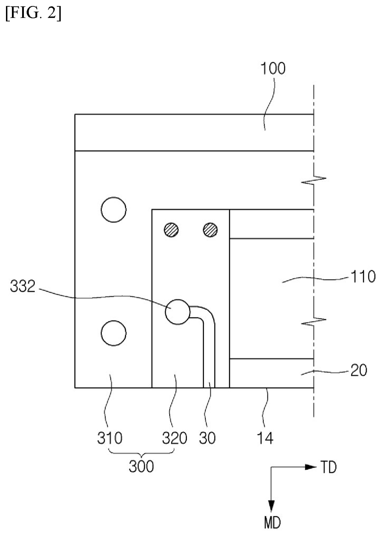

The spacer shim 320 shown in FIG. 1 is equipped with an insulating solution flow path 334 for discharging insulating solution along with the electrode slurry. FIG. 2 is an enlarged view of portion "A" of FIG. 1, showing the spacer shim 320 equipped with the insulating solution flow path 334 in detail.

As shown in FIG. 2, the spacer shim 320 has concave insulating solution flow paths 334 formed on its surface. The insulating solution flow paths 334 have a narrow groove-like shape. One end of the insulating solution flow path 334 is in communication with an insulating solution supply hole 332 for supplying insulating solution, and the other end of the insulating solution flow path 334 extends toward and is open to the front surface 12 of the slot die coater 10, i.e., the lip 14. The other end of the open insulating solution flow path 334 forms an insulating solution slot 30.

According to the structure of the coater shim 300, the electrode slurry pressurized and filled into the manifold 110 is discharged outside the lip 14 through the electrode slurry slots 20 between the spacer shims 320 spaced apart across the manifold 110. Furthermore, through the insulating solution flow paths 334 formed in the spacer pins 320, insulating solution is simultaneously discharged toward both corners of the electrode slurry discharged from the electrode slurry slots 20. By this simultaneous discharge of insulating solution, the extent to which the electrode slurry spreads, i.e., the sliding length of the electrode slurry, is controlled.

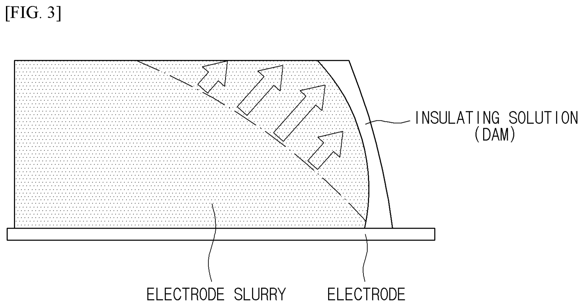

FIG. 3 is a drawing illustrating sliding control achieved by simultaneously discharging electrode slurry and insulating solution. The discharged electrode slurry spreads in the transverse direction TD due to its own fluidity, and the extent of this spreading is suppressed by the insulating solution discharged adjacent to the corners. In other words, the insulating solution acts as a dam to suppress the spreading of the electrode slurry, and by adjusting the discharge volume and width of the insulating solution, the height and width of the dam can be controlled to regulate the extent of spreading of the electrode slurry.

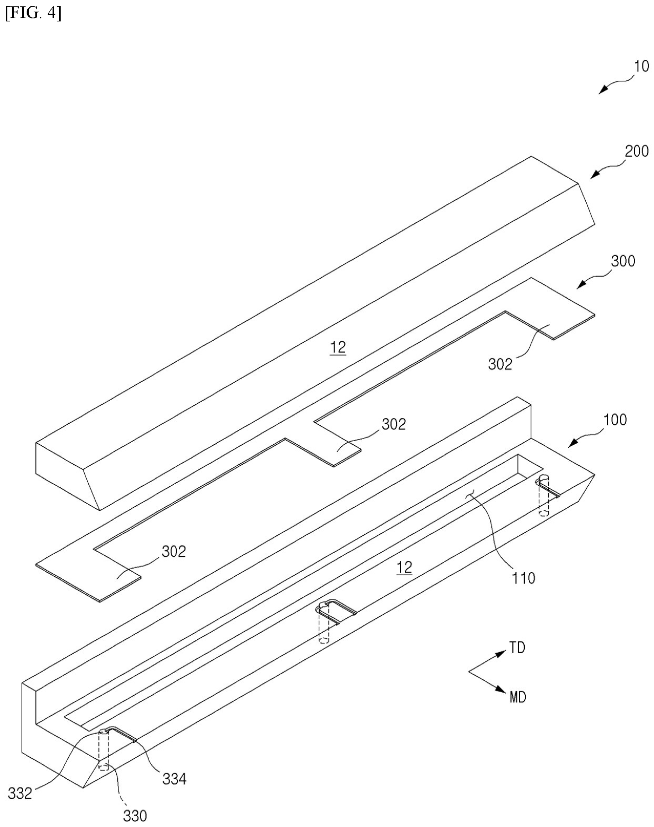

FIG. 4 illustrates a slot die coater 10 according to an embodiment of the present disclosure. The slot die coater 10 in FIG. 4 also includes a first die block 100 equipped with a manifold 110 for accommodating the electrode slurry, a second die block 200 coupled to the first die block 100, a coater shim 300 interposed between the first die block 100 and the second die block 200. The coater shim 300 takes the form of wrapping around both sides and the rear surface of the manifold 110. In the present disclosure, the coater shim 300 does not necessarily need to form a two-piece structure with the body shim 310 and the spacer shim. This is because, as will be described later, the insulating solution slot 30 is provided in the first die block 100 and/or the second die block 200 itself.

The coater shim 300 shown in the figure is illustrated as a one-piece structure, but the coater shim 300 includes a plurality of branches 302. The plurality of branches 302 extend across the manifold 110 toward the front surface 12, i.e., the lip 14, of the first die block 100 and the second die block 200. Furthermore, the plurality of branches 302 is spaced apart along the transverse direction TD (the extension direction of the lip). The space between the spaced-apart branches 302 forms an area that is in communication with the manifold 110 and not sealed by the coater shim 300, and this thin, elongated space corresponds to the electrode slurry slot 20.

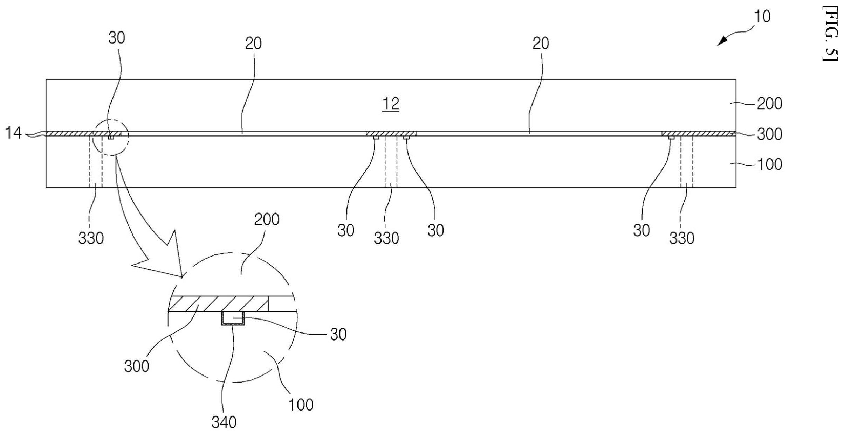

FIG. 5 is a drawing and partial enlargement of the front surface 12 of the slot die coater 10. FIG. 5 shows two electrode slurry slots 20 formed along the lip 14. Additionally, grooves are formed on the surface of the first die block 100 in contact with the coater shim 300. The leading end of the concave groove is open toward the front surface 12 of the first die block 100 and the second die block 200. The open ends of the grooves are adjacent to the electrode slurry slots 20, and the open ends of the grooves form the insulating solution slots 30.

The area around the concave grooves formed on the first die block 100 is in close contact with the coater shim 300. Therefore, when the first die block 100 and the second die block 200 are mutually fastened, the resulting fastening pressure acts on the entire coater shim 300, both surfaces of the coater shim 300 are in close contact with the first die block 100 and the second die block 200. As a result, the electrode slurry pressurized and filled into the manifold 110, as well as the insulating solution supplied through the groove, does not leak out from the surface of the coater shim 300. In other words, due to the pressurized adhesion of the coater shim 300, the electrode slurry is discharged only through the electrode slurry slot 20, and the insulating solution is discharged only through the insulating solution slot 30.

The groove formed on the surface of the first die block 100 forms an insulating solution flow path 334, and the inner end of the groove is connected to an insulating solution supply hole 332 that supplies insulating solution. The insulating solution supply hole 332 is connected to the insulating solution supply flow path 330, through which pressurized insulating solution is supplied from the outside. In the embodiment shown in FIG. 5, since grooves are formed on the surface of the first die block 100, it may be desirable for the insulating solution supply flow path 330 to pass through the first die block 100 and connect to the insulating solution supply hole 332.

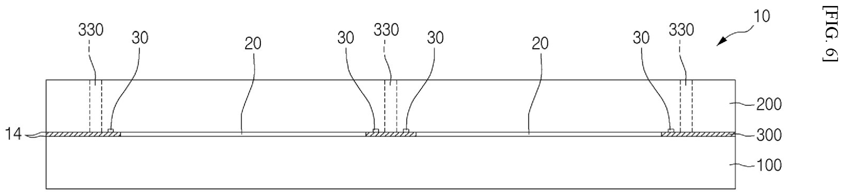

FIG. 6 is another drawing showing the front surface 12 of the slot die coater 10. In the embodiment shown in FIG. 6, grooves are formed on the surface of the second die block 200. That is, according to the embodiment of the present disclosure, the grooves may be formed on the surface of the first die block 100 or on the surface of the second die block 200. In the embodiment shown in FIG. 6, since grooves are formed on the surface of the second die block 200, the insulating solution supply flow path 330 may preferably pass through the second die block 200 and connect to the insulating solution supply hole 332.

Furthermore, as shown in the example illustrated in FIG. 1, a wear-resistant coating layer 340, such as a diamond coating layer, may be formed on the surface of the groove forming the insulating solution slot 30. By forming the wear-resistant coating layer 340 to increase the surface strength or hardness of the groove, durability is improved, enabling the slot die coater 10 to be operated stably for an extended period without replacing the first die block 100 or the second die block 200.

### [Second embodiment]

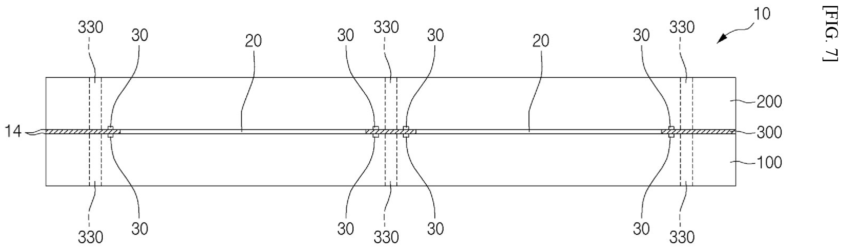

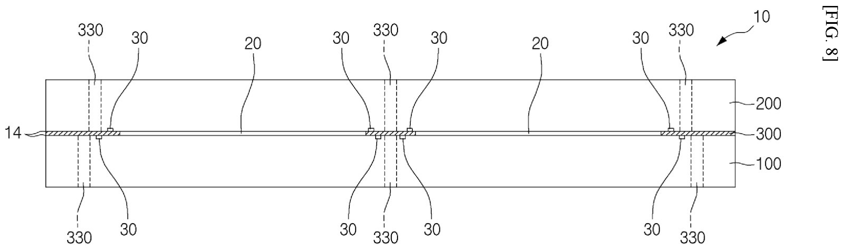

FIGS. 7 and 8 are drawings illustrating an embodiment of a slot die coater 10 having a double groove configuration. In the second embodiment, the groove forming the insulating solution flow path 334 is provided on both sides of the first die block 100 and the second die block 200. That is, the double groove referred to in the second embodiment refers to a structure in which two insulating solution slots 30 are provided on either side of the coater shim 300.

Referring again to FIG. 3, the insulating solution acts as a dam to suppress the spread of the electrode slurry. In the embodiments shown in FIGS. 7 and 8, the discharge of the insulating solution is arranged to occur from both the upper and lower sides. This dual insulating solution discharge provides a high degree of design freedom in configuring the insulating solution dam. For example, the discharge quantities of the insulating solution from the upper and lower sides can be set differently, or the properties of the insulating solution discharged from the upper and lower sides, such as viscosity, can be designed differently.

In the embodiment shown in FIG. 7, the openings of the insulating solution slots 30 formed in the grooves on the surfaces of the first die block 100 and the second die block 200 are disposed so that they overlap vertically. Here, "overlap" includes both complete alignment of the openings of the upper and lower insulating solution slots 30 and partial overlap.

On the other hand, in the embodiment shown in FIG. 8, the openings of the insulating solution slots 30 formed in the grooves on the surfaces of the first die block 100 and the second die block 200 are spaced apart so as not to overlap vertically. In this way, in the embodiment where the first die block 100 and the second die block 200 are provided with insulating solution slots 30 on both sides, the size and position of the upper and lower insulating solution slots 30, as well as various parameters of the insulating solution discharged vertically, can be designed flexibly. This provides the advantageous effect of enabling free adjustment of the sliding length, corner shape, and thickness of the electrode slurry to optimal levels.

### [Third embodiment]

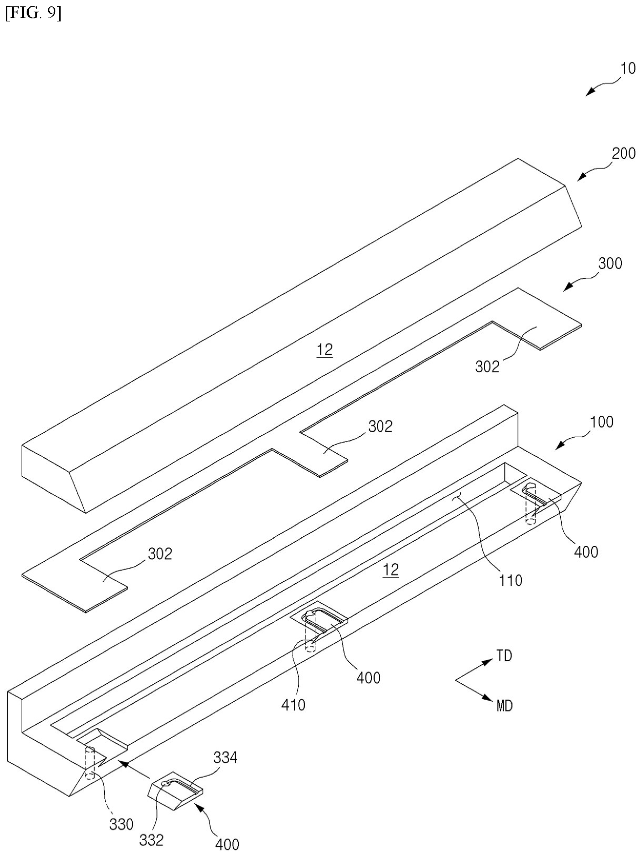

FIG. 9 is a drawing illustrating the slot die coater according to the third embodiment of the present disclosure. As described in the first and second embodiments, the slot die coater 10 of the present disclosure has a technical configuration in which grooves forming insulating solution flow paths 334 are formed on the surface of the first die block 100 and/or the second die block 200. By providing insulating solution slots 30 on the surface of the first die block 100 and/or the second die block 200, which are highly rigid and resistant to deformation, the insulating solution slots 30 are not formed on a thin spacer shim 320 as in conventional slot die coaters 10, often causing the spacer shim 320 to bend or become damaged due to the pressure of the insulating liquid. Instead, the slot die coater 10 of the present disclosure can operate stably for extended periods without issues related to the durability of the insulating solution slots 30.

However, since the insulating solution slot 30 is formed on the surface of the first die block 100 and/or the second die block 200, which are costly to manufacture, in cases where the insulating solution slot 30 malfunctions or design specifications need to be changed, prompt response is difficult, and this may impose additional costs.

The third embodiment relates to a slot die coater 10 that maintains the configuration of providing insulating solution slots 30 on the surface of the first die block 100 and/or the second die block 200, while enabling easy modification of the insulating solution slots 30 for advantageous maintenance and repair.

Referring to FIG. 9, the groove forming the insulating solution slot 30 in the third embodiment is formed on a reinforcing plate 400 that is replaceably coupled to the first die block 100 and/or the second die block 200. The reinforcing plate 400 may be made of the same material as the first die block 100 and/or the second die block 200, or of a material having higher strength. In other words, the reinforcing plate 400 may be made of a material having equal or higher strength than the first die block 100 and/or the second die block 200.

The reinforcing plate 400 can be considered as a single component that is replaceably coupled to the first die block 100 and/or the second die block 200, therefore, in situations where there is an issue with the insulating solution slot 30 or it needs to be replaced with an insulating solution slot 30 of different specifications, the reinforcing plate 400 with the groove can simply be replaced. Ultimately, by adopting the configuration of replacing the reinforcing plate 400 with grooves formed therein, there is no need to replace the first die block 100 and/or the second die block 200 themselves.

For easy replacement and accurate positioning, the reinforcing plate 400 can be slidably coupled to the first die block 100 and/or the second die block 200. Additionally, to prevent unintended disengagement due to external forces, the reinforcing plate 400 and the first die block 100 and/or the second die block 200 may each be provided with a dovetail-shaped contact surface 410. Furthermore, the slot die coater may further include a stopper 420 to restrict the separation of the reinforcing plate 400 from the first die block 100 and/or the second die block 200.

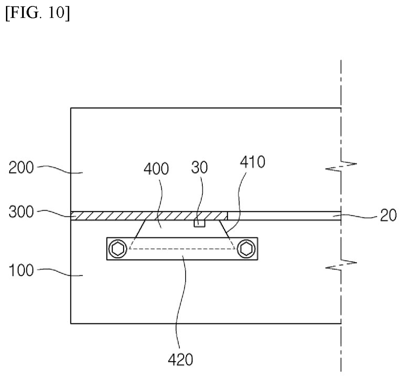

FIG. 10 illustrates an example of the fixing structure of the reinforcing plate 400 in combination with the dovetail-shaped contact surface 410 and the stopper 420. The transverse direction TD indicated in the figure refers to the extension direction of the electrode slurry slot 20 that discharges the electrode slurry, corresponding to the transverse direction TD of the electrode traveling relative to the slot die coater 10. The machine direction MD is the direction perpendicular to the transverse direction TD, corresponding to the direction in which the electrode traveling with the electrode slurry is applied. As shown in the drawings, the reinforcing plate 400 is prevented from deviating in the transverse direction TD and the vertical direction by the dovetail-shaped contact surface 410, and the reinforcing plate 400 is prevented from deviating in the machine direction MD by the stopper 420.

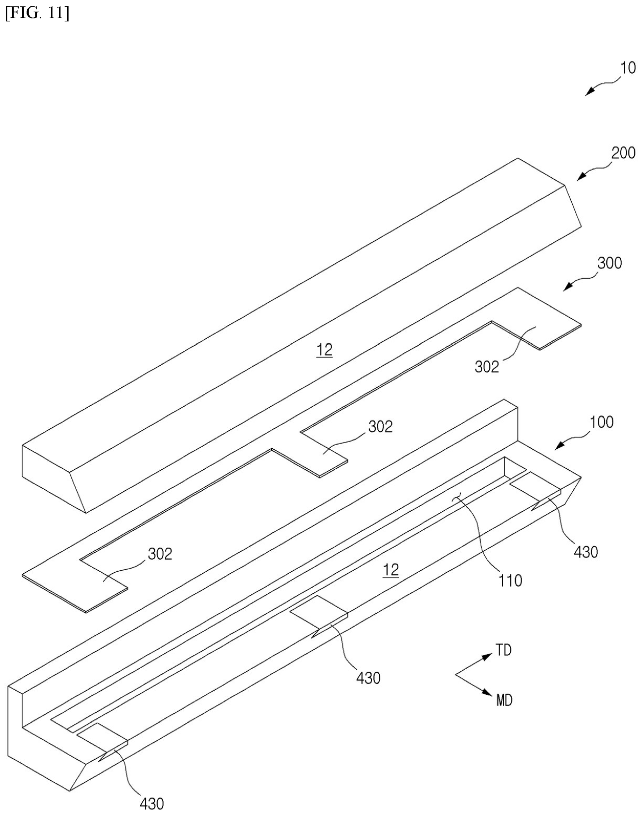

Additionally, depending on the embodiment, the slot die coater 10 may further include a dummy plate 430 that has the same shape as the reinforcing plate 400 but without grooves, as shown in FIG. 11. The dummy plate 430 serves to close the insulating solution supply hole 332 to prevent the insulating solution from being discharged. By further providing the dummy plate, the slot die coater 10 of the present disclosure can be used in combination with a configuration that discharges only the electrode slurry. The dummy plate 430 has the same shape as the reinforcing plate 400 except that it does not form an insulating solution flow path 334, so the aforementioned fixing structure of the reinforcing plate 400 can be applied as is.

The present disclosure has been described in more detail above with reference to the drawings and embodiments. However, it should be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A slot die coater comprising:
a first die block provided with a manifold for accommodating an electrode slurry;
a second die block coupled to the first die block; and
a coater shim interposed between the first die block and the second die block in a form that wraps around both sides and a rear surface of the manifold, wherein
at front surfaces of the first die block and the second die block, an area not sealed by the coater shim while communicating with the manifold forms an electrode slurry slot, and
on the surface of the first die block and/or the second die block in contact with the coater shim, a groove formed concavely to have an open end toward the front surface of the first die block and the second die block forms an insulating solution slot.

2. The slot die coater of claim 1, wherein
an insulating solution supply flow path is connected to an inner closed end of the groove forming the insulating solution slot.

3. The slot die coater of claim 2, wherein
the insulating solution supply flow path is connected to the inner closed end of the groove by passing through the first die block and/or the second die

4. The slot die coater of claim 1, wherein
a wear-resistant coating layer is formed on the surface of the groove forming the insulating solution slot.

5. The slot die coater of claim 1, wherein
the groove forming the insulating solution slot is formed on surfaces of the first die block and the second die block, wherein
openings of the insulating solution slots of the groove formed on the surfaces of the first die block and the second die block are disposed so that they overlap vertically.

6. The slot die coater of claim 1, wherein
the groove forming the insulating solution slot is formed on surfaces of the first die block and the second die block, wherein
openings of the insulating solution slots of the groove formed respectively on the surfaces of the first die block and the second die block are spaced apart so that they do not overlap vertically.

7. The slot die coater of claim **1,** wherein
the groove forming the insulating solution slot is formed on a reinforcing plate that is replaceably coupled to the first die block and/or the second die block.

8. The slot die coater of claim 7, wherein
the reinforcing plate is slidably coupled to the first die block and/or the second die block.

9. The slot die coater of claim 8, wherein
the reinforcing plate, the first die block, and/or the second die block each have a dovetail-shaped contact surface.

10. The slot die coater of claim 7, further comprising:
a stopper for restricting the separation of the reinforcing plate from the first die block and/or the second die block.

11. The slot die coater of claim 7, wherein
the reinforcing plate is made of a material having equal or greater strength than the first die block and/or the second die block.

12. The slot die coater of claim 7, further comprising:
a dummy plate having a shape corresponding to a shape of the reinforcing plate but without a groove.
